# FASCICULE DE BREVET EUROPEEN

(11) **EP 3 675 546 B1**
(45) Date de publication et mention de la délivrance du brevet: **13.11.2024**
(21) Numéro de dépôt: 19220127.5
(22) Date de dépôt: 30.12.2019
(51) Int. Cl.: H04W 16/14, H04B 1/00, H04B 1/10

(54) **SCANNER RADIO EMBARQUÉ DANS UNE STRUCTURE MOBILE D'UN SYSTÈME DE RADIOCOMMUNICATIONS, ET PROCÉDÉ D'UTILISATION DU SCANNER RADIO**
FUNKSCANNER AN BORD EINER MOBILEN STRUKTUR EINES FUNKKOMMUNIKATIONSSYSTEMS, UND VERFAHREN ZU IHRER VERWENDUNG
RADIO SCANNER ON-BOARD A MOBILE STRUCTURE OF A RADIO COMMUNICATION SYSTEM, AND METHOD OF USING THIS RADIO SCANNER

(30) Priorité: 30.12.2018 FR 1874392; 02.04.2019 EP 19305433
(43) Date de publication de la demande: 01.07.2020
(73) Titulaire: BULL SAS, 78340 Les Clayes-sous-Bois (FR)
(72) Inventeur: PISON, Laurent, 78760 Jouars Pontchartrain (FR)
(74) Mandataire: IPAZ

(56) Documents cités:
- WO-A1-2012/003566
- FR-A1- 2 818 077
- US-A1- 2011 223 877

## Description

La présente invention concerne de manière générale les systèmes de radiocommunications avec les mobiles basés sur la technologie cellulaire LTE. En particulier, elle concerne un scanner radio embarqué dans une structure mobile d'un système de radiocommunications.

### [Art antérieur]

Les réseaux de télécommunication avec les mobiles, comme les réseaux cellulaires selon la norme LTE (« *Long Term* Evolution » selon une terminologie anglo-saxonne) définie par le consortium 3GPP et son évolution LTE-A (« Advanced LTE » selon une terminologie anglo-saxonne), permettent d'établir des communications à haut débit entre des terminaux mobiles, avec une faible latence et une tolérance élevée aux déplacements relatifs des différentes entités mobiles qui forment le réseau. L'architecture de ces réseaux repose généralement sur un ensemble de stations de base, appelées eNodeB (de l'anglais « *evolved Node* B ») dans la norme LTE, qui sont des nœuds de réseau fixes formant la partie radio du réseau, appelée eUTRAN dans la norme LTE, et qui établissent des communications sans fil avec des terminaux mobiles, appelés UEs (de l'anglais « *User Equipements* ») dans la norme LTE, via une interface radio spécifique, appelée interface Uu dans la norme LTE. La partie radio d'un réseau LTE se compose des eNodeB, d'antennes locales ou distantes, de liaisons en fibres optiques vers les antennes distantes (par exemple des liens de type CPRI pour « Common Public Radio Interface » en terminologie anglosaxonne) et des liaisons IP (« Internet Protocol ») reliant les eNodeB entre eux (interface X2) et avec le cœur de réseau (interface S1).

La norme LTE est compatible avec le concept de cellule mobile, suivant lequel une station de base peut elle-même être mobile, comme étant installée dans une structure mobile (par exemple un véhicule de pompiers, ou un véhicule de type « command-car » des forces de sécurité, par exemple), afin de pouvoir projeter en tout lieu d'un territoire une cellule LTE capable de servir un groupe de terminaux de communication mobiles LTE utilisés par les agents des forces de police, des pompiers, etc.

Toutefois, dans le cadre du déplacement d'un eNodeB et plus généralement d'une cellule mobile, le spectre de fréquence utilisé pour communiquer avec ses terminaux de communication mobiles peut entrer en conflit avec des spectres de fréquences utilisé par des structures tierces. En outre, lors de l'établissement d'une liaison de transport de données de type backhaul qui relie directement entre eux les équipements radio de plusieurs structures mobiles requiert de connaître certaines informations relatives aux autres entités avec lesquelles une telle liaison peut être établie, pour initier l'établissement et/ou permettre le bon fonctionnement de la liaison.

Ainsi, il existe un besoin pour une structure mobile comportant une station de base et capable de déterminer des informations sur l'utilisation d'un spectre de fréquence par des structures tierces évoluant dans son environnement proche.

Un exemple est fourni dans le document FR 2 818 077.

### [Problème technique]

L'invention est définie par les revendications indépendantes. Les revendications dépendantes couvrent des modes particuliers de réalisation de l'invention.

L'invention a pour but de remédier aux inconvénients de l'art antérieur. En particulier, l'invention a pour but de proposer une structure mobile d'un système de communication capable de déterminer des informations associées à l'utilisation d'un spectre de fréquence par la structure tierce pour des transmissions radio émises. Une telle structure a pour but de déterminer les ressources radio fréquentielles utilisées par tous les équipements radio situés dans l'environnement immédiat de la structure mobile et, d'identifier, le cas échéant, une structure tierce avec laquelle une liaison de transport de données de type backhaul est susceptible d'être établie.

L'invention a en outre pour but de proposer un système de radiocommunication comportant une telle structure mobile ainsi qu'un procédé d'utilisation d'un scanner radio embarqué dans ladite structure mobile.

### [Brève description de l'invention]

A cet effet, un premier aspect de l'invention concerne une structure mobile d'un système de radiocommunications ayant au moins une station de base qui est adaptée pour établir des liaisons de communication cellulaire avec des terminaux de communication mobiles, via une interface radio déterminée, dans un spectre de fréquence déterminé, la structure mobile comprenant un scanner radio embarqué ayant des moyens de mesure d'un signal radiofréquence émis dans le spectre de fréquence déterminé, par au moins une structure tierce située dans l'environnement immédiat de la structure mobile, et étant configuré pour déterminer, sur la base de propriétés physiques du signal radiofréquence mesuré, des informations associées à l'utilisation du spectre de fréquence déterminé pour des transmissions radio émises par la structure tierce.

L'invention permet ainsi, de détecter la présence d'une structure tierce, de déterminer la distance de séparation avec cette structure tierce, de déterminer aussi les ressources radio fréquentielles utilisées par tous les équipements radio situés dans l'environnement immédiat de la structure mobile et enfin, d'identifier, le cas échéant, une structure tierce avec laquelle une liaison de transport de données de type backhaul est susceptible d'être établie. Avantageusement, les informations associées à l'utilisation du spectre de fréquence déterminé pour des transmissions radio émises par la structure tierce peuvent servir à une décision d'initier ou pas, et pour le cas échéant pour gérer l'établissement d'une liaison de transport de données de type backhaul entre la structure mobile et la structure tierce.

Grâce à l'invention, une structure mobile susceptible d'établir une telle liaison est capable de déterminer qu'une structure tierce, avec laquelle elle pourrait établir une liaison de transport de données, se trouve ou non à portée de ses propres équipements radio. Autrement dit, la structure mobile dispose de moyens lui permettant de savoir si une structure tierce entre ou sort d'une zone, qui est située dans son environnement immédiat, et dans laquelle ladite structure tierce est éligible à l'établissement d'une liaison de transport de données de type backhaul.

En outre, la structure mobile qui établit une liaison de transport de données est également capable, grâce à l'invention, de déterminer si la structure tierce avec laquelle elle établit cette liaison s'éloigne d'elle, se rapproche d'elle ou reste à distance constante. Ceci permet, d'une part, que la mise en place de la liaison de transport de données soit optimisée compte-tenu de cette distance et, d'autre part, que les paramètres de cette liaison (comme la puissance radio) soient adaptés à la distance qui sépare réellement la structure mobile de la structure tierce.

En second lieu, lorsqu'une structure tierce susceptible d'établir une telle liaison est détectée dans l'environnement de la structure mobile l'invention permet d'identifier cette structure tierce. En particulier, lorsque la structure mobile est embarquée dans un premier véhicule et lorsque la structure tierce est un équipement radio embarquée dans un autre véhicule, l'identification peut alors conditionner tout établissement d'une liaison de transport de données de type backhaul entre les deux. En effet, en fonction du fait que le second véhicule est un véhicule ami, ennemi ou neutre, l'établissement d'une liaison de transport de données de type backhaul peut être souhaitable ou non.

Enfin, la mise en œuvre de l'invention permet la prise en compte d'informations qui sont importantes pour l'établissement d'une liaison de transport de données de type backhaul performante, à savoir des informations relatives à l'utilisation qui est faite du spectre de fréquence par les différents équipements radios qui sont présents dans l'environnement immédiat de la structure mobile. En effet, les communications d'une station de base avec les terminaux mobiles de sa cellule sont réalisées dans un spectre de fréquence déterminé. Ce spectre de fréquence, typiquement une bande de fréquence normalisée selon la norme LTE du consortium 3GPP, est composée d'au moins une bande de fréquence ayant une fréquence centrale et une largeur spectrale déterminées. Dès lors que ce spectre de fréquence est utilisé pour plusieurs communications en même temps, il devient nécessaire de répartir au mieux les fréquences utiles disponibles entre les différentes communications afin d'optimiser les performances de chacune d'elle et éviter ou limiter la survenue d'interférences. Or, ce spectre de fréquence peut être utilisé pour les communications de chaque station de base de chaque structure mobile avec les terminaux de sa cellule et aussi pour l'établissement d'une liaison de transport de données de type backhaul entre plusieurs structures mobiles.

Dit autrement, un fonctionnement optimal d'une liaison de ce type implique une répartition optimisée des ressources radio utilisées par tous les équipements radio présents dans l'environnement immédiat de la structure mobile. Or, une répartition optimisée repose sur une connaissance précise de l'utilisation du spectre de fréquence faite par tous les équipements radio présents dans l'environnement immédiat de la structure mobile et susceptibles d'utiliser tout ou partie de ce spectre. L'invention permet donc à une entité de commande de gérer l'utilisation (notamment l'allocation) des ressources radio dans le spectre sur la base des informations obtenues grâce au scanner.

**Selon d'autres caractéristiques optionnelles d'une structure mobile conforme à l'invention :**
- les propriétés physiques du signal radiofréquence mesuré comprennent la puissance du signal radiofréquence mesuré ainsi que des caractéristiques fréquentielles du signal radiofréquence mesuré telles que sa fréquence centrale et sa largeur spectrale. Cela permet avantageusement d'optimiser la gestion de l'allocation des ressources radio.
- les informations associées à l'utilisation du spectre de fréquence par la structure tierce comprennent l'entrée ou la sortie de la structure tierce dans l'environnement immédiat de la structure mobile; l'éloignement ou le rapprochement de la structure tierce de la structure mobile; et, la ou les bandes de fréquence du spectre de fréquence qui sont utilisées par la structure tierce. Ces caractéristiques permettent d'optimiser la gestion de l'allocation des ressources radio pour un fonctionnement optimal de la structure mobile et de la structure tierce.
- les informations associées à l'utilisation du spectre de fréquence déterminé sont déterminées pour des transmissions radio émises par une station de base de la structure tierce. Ainsi dans ce cas, la structure tierce comporte une station de base qui de préférence n'est pas connectée à la station de base de la structure mobile.
- les moyens de mesure du scanner radio embarqué sont configurés pour mesurer le signal radiofréquence émis par un relais radio émettant majoritairement sur le spectre DL (Down-link en terminologie anglo-saxonne).
- les moyens de mesure du scanner radio embarqué sont configurés pour mesurer le signal radiofréquence sur des ressources radios non utilisées par les liaisons de communication cellulaire avec les terminaux de communication mobiles. Ainsi, cela permet de réduire les interférences dans la mesure des transmissions radio émises par la structure tierce.
- le spectre de fréquence déterminée est une bande de fréquence adaptée au système LTE du consortium 3GPP.Un tel spectre de fréquence peut ainsi être utilisé pour la transmission de données au travers des technologies de type Wi-fi et/ou Wimax.
- les moyens de mesure d'un signal radiofréquence émis dans le spectre de fréquence comprennent des moyens intégrés à la station de base de la structure mobile. En particulier, les moyens de mesure d'un signal radiofréquence comportent une chaine de traitement radio et des antennes associées à la station de base de la structure mobile. Cela permet au scanner radio embarqué de disposer d'équipement performants sans surcout. Alternativement, les moyens de mesure d'un signal radiofréquence émis dans le spectre de fréquence comprennent des moyens de mesure propres au scanner radio embarqué.
- elle comprend en outre des moyens d'identification d'une structure tierce située dans l'environnement immédiat de la structure mobile, lesdits moyens d'identification étant configurés pour identifier, sur la base d'informations contenues dans le signal radiofréquence mesuré, la structure tierce émettrice d'un signal radiofréquence mesuré par lesdits moyens de mesure du scanner radio. Cela permet avantageusement de détecter et d'identifier un spectre de fréquence, ainsi qu'une technologie impliquée dans la transmission de données, telles que les technologies de type LTE 3M, LTE 10 MHz, Wi-fi 20 MHz etc.
- les informations contenues dans le signal radiofréquence mesuré par les moyens de mesure du scanner radio et utilisées par les moyens d'identification comprennent un identifiant de type Cell-ID associé à une station de base d'une autre structure mobile, et/ou un identifiant de type PLMNid associé à un terminal de communication mobile d'une autre structure mobile. Ces caractéristiques permettent de mettre en évidence l'identité d'un réseau et d'une cellule, par un scanner radio, d'une structure tierce.
- Elle comprend en outre des moyens de reconnaissance configurés pour reconnaître, sur la base des informations contenues dans le signal radiofréquence mesuré par les moyens de mesure du scanner radio embarqué, des caractéristiques technologiques de la transmission radio réalisées par la structure tierce telles que le format de modulation utilisé, l'interface radio utilisée, et/ou le protocole utilisé pour ladite transmission radio.
- le scanner radio embarqué est configuré pour transmettre à une entité de commande de la structure mobile, des informations associées à l'utilisation du spectre de fréquence, pour des transmissions radio, par la structure tierce. Ainsi, les informations peuvent être traitées et utilisées pour modifier la configuration des liaisons de communication cellulaire avec des terminaux de communication mobiles. En outre, ces informations peuvent être utilisées pour commander le changement de la ou des bandes de fréquences utilisées par l'équipements radio de la structure mobile pour leurs communication radio et éviter ainsi des interférences avec les communications radio d'une structure mobile tierce.
- l'entité de commande de la structure mobile, est configurée pour identifier des ressources radio libres, telles qu'un nouveau spectre de fréquence d'une largeur inférieure au spectre de fréquence déterminé, n'étant pas utilisées par la structure tierce. Les ressources radio libres peuvent par exemple correspondre à des bandes de fréquences non utilisées par la structure tierce.
- l'entité de commande de la structure mobile, est configurée pour réinitialiser les liaisons de communication cellulaire avec les terminaux de communication mobiles de façon à utiliser au moins une partie des ressources radio libres. En particulier, les liaisons de communication cellulaire avec les terminaux de communication mobiles n'utiliseront que des ressources radio libres. Ainsi, l'entité de commande utilise ces informations avant d'établir une nouvelle liaison de transport de données pour attribuer à cette liaison les ressources radio optimales. Ainsi, il n'y aura pas ou il y aura moins d'interférences avec les communications de la structure tierce.
- l'entité de commande de la structure mobile, est configurée pour attribuer une partie des ressources radio libres à l'établissement d'une liaison de transport de données de type backhaul reliant la structure mobile à la structure tierce. En particulier, les ressources radio libres attribuées au backhaul sont différentes des ressources radio libres attribuées aux liaisons de communication cellulaire avec les terminaux de communication mobiles.
- l'entité de commande de la structure mobile, est configurée pour identifier les ressources radio utilisées par la structure tierce et pour réinitialiser les liaisons de communication cellulaire avec les terminaux de communication mobiles de façon à ne pas utiliser les ressources radio utilisées par la structure tierce.
- l'entité de commande de la structure mobile, est configurée pour identifier les ressources radio utilisées par la structure tierce, identifier le réseau utilisé par la structure tierce (e.g. PLMNid) et pour configurer les terminaux de communication mobiles de façon à stopper toute émission d'un signal radiofréquence.

Selon un autre aspect, l'invention porte sur un système de radiocommunications comprenant une structure mobile conforme à l'invention et au moins une structure tierce, ladite structure tierce étant une structure tierce mobile. En effet, il est possible que la structure tierce soit mobile et entre ou sorte de la portée de la structure mobile alors qu'elle est elle-même à l'état stationnaire.

Selon un autre aspect, l'invention porte sur un procédé d'utilisation d'un scanner radio d'une structure mobile selon l'invention, ledit procédé comprenant les étapes de mesure d'un signal radiofréquence émis dans le spectre de fréquence, par au moins une structure tierce, située dans l'environnement immédiat de la structure mobile et, détermination, sur la base de propriétés physiques du signal radiofréquence mesuré, d'informations associées à l'utilisation du spectre de fréquence déterminé, pour des transmissions radio émises par la structure tierce.

**Selon d'autres caractéristiques optionnelles d'un procédé d'utilisation d'un scanner radio conforme à l'invention :**
- il comprend en outre l'étape préalable suivante, exécutée par une entité de commande de la structure mobile : interruption des communications radio entre la station de base de la structure mobile et les terminaux de communication mobiles de la structure mobile. Néanmoins, ceci peut avoir un impact sur le service des communications mobiles, car il faut les interrompre ponctuellement de façon à réaliser les mesures. Ainsi, de façon préférée, le procédé comprend en outre l'étape suivante, exécutée par une entité de commande de la structure mobile : allocation de ressources radio dédiées au scanner radio embarqué, lesdites ressources radio dédiées au scanner radio embarqué n'étant pas utilisées par les communications radio entre la station de base de la structure mobile et les terminaux de communication mobiles de la structure mobile
- il comprend en outre l'étape suivante : transmission à l'entité de commande de la structure mobile, des informations associées à l'utilisation du spectre de fréquence, pour des transmissions radio émises par la structure tierce.

- - il comprend en outre l'étape suivante : identification par l'entité de commande de la structure mobile, de ressources radio libres, telles qu'un nouveau spectre de fréquence d'une largeur inférieure au spectre de fréquence déterminé, n'étant pas utilisées par la structure tierce.

D'autres avantages et caractéristiques de l'invention apparaitront à la lecture de la description suivante donnée à titre d'exemple illustratif et non limitatif, en référence aux figures des dessins annexés dans lesquels :

**[****Fig. 1****]** est schéma fonctionnel illustrant un mode de réalisation d'un scanner radio embarqué dans une structure mobile selon l'invention ;

**[****Fig. 2****]** est un diagramme d'étapes d'un mode de mise en oeuvre d'un procédé selon l'invention.

Sur les figures, les organigrammes et les schémas fonctionnels illustrent l'architecture, la fonctionnalité et le fonctionnement d'implémentations possibles de systèmes et de procédés selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### [Description de l'invention]

Dans la description de modes de réalisation qui va suivre et dans les dessins annexés, les mêmes éléments ou des éléments similaires portent les mêmes références numériques aux figures.

Dans la description qui suit, les termes « structure mobile » désignent une entité qui comprend des moyens de communications cellulaire avec des terminaux mobiles d'utilisateur appartenant à la structure mobile. La « structure mobile » peut être embarquée dans un « moyen d'accueil ». Un tel moyen d'accueil correspond à tout moyen en capacité d'accueillir une structure mobile selon l'invention. A titre d'exemples non limitatifs, un moyen d'accueil peut être sélectionné parmi : des campements nomades ou des véhicules tels que des véhicules terrestres, véhicules aériens ou véhicules maritimes, ledit moyen d'accueil étant équipé de la structure mobile selon l'invention. Un moyen d'accueil peut également consister en une infrastructure n'ayant pas la capacité de se mouvoir (campement), agencée pour accueillir une structure mobile conforme à l'invention.

Par les termes « scanner radio », on entend un outil permettant de détecter et d'identifier, dans le spectre considéré, une utilisation (en émission) de ce spectre par un dispositif radio n'appartenant pas à la structure mobile mais qui est de la même technologie, notamment de la technologie LTE dans le contexte des modes de mise en œuvre qui sont envisagés.

L'expression « structure tierce » ou « structure mobile tierce » désigne tout équipement radio d'une autre structure, possiblement mobile, tel qu'une station de base, un terminal mobile ou un équipement utilisateur dédié, capable d'établir une liaison de transport de données avec les équipements radio de la structure mobile concernée. Une structure mobile peut être en mouvement ou stationnaire (i.e., immobile). Elle est généralement nomade (i.e., alternant des phases de mobilité et des phases stationnaires).

Le terme « réseau de backhaul », ou « backhaul », est utilisé dans les réseaux de téléphonie mobile comme LTE pour désigner le réseau et les liens de transport de données entre le cœur de réseau et les antennes relais de la partie radio du réseau de téléphonie mobile. C'est un réseau intermédiaire qui permet l'émission et la réception de données entre les stations de base qui font office d'équipements de raccordement d'abonnés (i.e., d'utilisateurs mobiles), d'une part, et le cœur de réseau, d'autre part. Ces échanges sont réalisés sous le protocole IP (« *Internet Protocol* »). Dans les réseaux de télécommunication fixes ou mobiles, le réseau de backhaul utilise largement la fibre optique pour le transport des données.

En outre, le terme « environnement immédiat » désigne ici une zone géographique autour de la structure mobile concernée dont l'étendue correspond sensiblement à celle de la zone de couverture radio de la station de base de ladite structure mobile, c'est-à-dire à l'étendue de la cellule mobile de cette structure mobile. La surface couverte par une telle zone peut dépendre de la puissance associée à un équipement radio et de de la hauteur à laquelle il se trouve. A titre d'exemple, un équipement radio d'un navire peut être fixé sur un mat. Il est alors possible qu'un environnement immédiat à une portée d'un équipement radio de l'ordre de plusieurs dizaines de kilomètres, pour un équipement radio d'une puissance de quelques dizaines de Watts fixé à vingt mètres de hauteur.

Par « propriétés physiques » on entend, par exemple, la puissance du signal en fonction de la fréquence. On parle aussi de puissance et de caractéristiques fréquentielles du signal radiofréquence mesuré. Par ailleurs, l'homme du métier appréciera que ces propriétés physiques peuvent être toute propriété du signal pouvant être utilisée pour déterminer des informations associées à l'utilisation du spectre de fréquence par une structure mobile tierce.

Dans un contexte d'utilisation d'une structure mobile d'un système de radiocommunications, il peut être nécessaire de mesurer rapidement un signal radiofréquence émis par une structure tierce. Dans ce contexte, les inventeurs ont développé une structure mobile permettant de déterminer des informations associées à l'utilisation d'un spectre de fréquence déterminé pour des transmissions radio émises par une structure tierce.

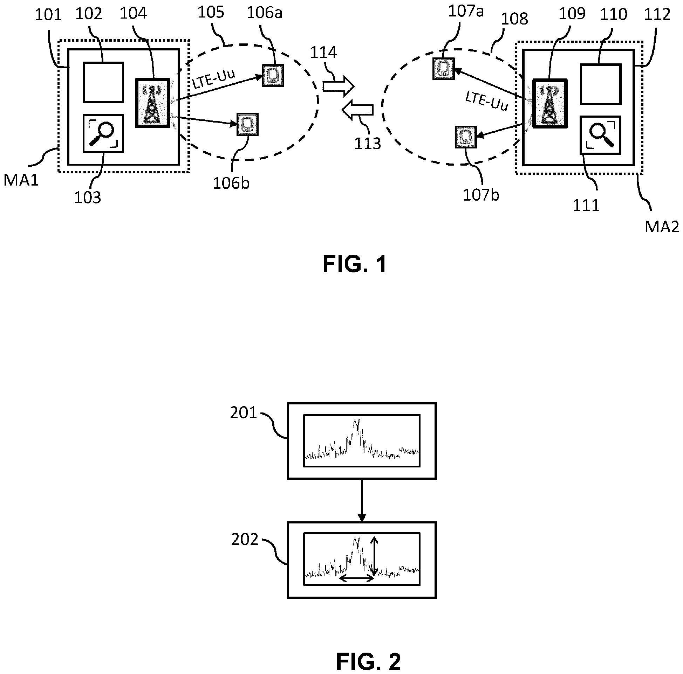

En référence au schéma de **la** **figure 1****,** il va tout d'abord être décrit un mode de réalisation d'un scanner radio embarqué dans une structure mobile selon l'invention.

Dans l'exemple représenté à la figure 1, deux structures mobiles 101 et 112 sont chacune équipée de stations de bases 104 et 109, d'entités de commande 102 et 110 et de scanner radio 103 et 111. Dans l'exemple décrit en lien avec la figure 1, les structures mobiles 101 et 112 sont embarquées dans des moyens d'accueil MA1, MA2, lesdits moyens d'accueil consistant respectivement en un véhicule distinct. L'exemple représenté à la figure 1 n'est toutefois pas limitatif, et l'homme du métier appréciera que l'invention peut s'appliquer à un nombre de structures mobiles supérieur ou égal à deux, chacune desdites structures mobiles pouvant être comprises ou embarquée dans un moyen d'accueil fixe ou apte à se déplacer.

Les stations de base 104 et 109 sont par exemple les entités appelées eNodeB (de l'anglais « *evolved Node* B ») telles qu'elles sont couramment utilisées dans les réseaux de radiocommunication mobile basés sur les normes LTE du consortium 3GPP. De façon connue en soi par l'homme du métier, et conformément aux normes LTE, elles constituent la passerelle entre le cœur du réseau LTE de transport de données par protocole IP, d'une part, et les terminaux de communication mobiles, ou équipements utilisateurs UE (de l'anglais « *User Equipment* ») 106a, 106b et 107a, 107b, d'autre part. En particulier, les eNodeB desservent des zones géographiques définies par l'étendue de leur couverture radio. Ces zones géographiques forment les cellules radio 105 et 108 au sein desquelles des communications radios sont établies entre chaque eNodeB et les terminaux mobiles (i.e., les UEs) 106 et 107 qui lui sont raccordés par des liaisons de communication cellulaire.

En outre, une eNodeB peut, dans certains modes de réalisation, desservir plusieurs cellules. Dans ce cas, l'eNodeB en question comporte plusieurs antennes qui réalisent chacune la couverture radio d'une zone géographique spécifique. Avantageusement mais non limitativement, un scanner radio peut être associé auxdites plusieurs cellules desservies par l'eNodeB. Dans un mode de réalisation particulier, un scanner radio peut être associé à chacune desdites cellules desservies par l'eNodeB. La couverture radio totale de l'eNodeB est sous-divisée en secteurs angulaires respectivement associés à une antenne particulière. Par exemple, dans un véhicule, l'eNodeB du véhicule peut couvrir quatre secteurs angulaires distincts, de 90° chacun, qui offrent une couverture radio dans toutes les directions à partir du véhicule . En variante ou en complément, l'eNodeB d'un véhicule peut couvrir trois secteurs angulaires distincts, de 120° chacun. Préférentiellement, l'eNodeB d'un véhicule peut couvrir un seul secteur angulaire de 360°.

Pour des raisons de lisibilité, les deux cellules représentées à la figure 1 et respectivement associées à l'eNodeB 104 et à l'eNodeB 109, ne comprennent que deux UE chacune. Toutefois, l'homme du métier appréciera que le nombre de terminaux mobiles présents dans chaque cellule peut évidemment être supérieur à deux. En outre, les eNodeB 104 et 109 utilisent des interfaces radio, telles que l'interface radio LTE-Uu couramment utilisée dans les réseaux de radiocommunication mobile basés sur les normes LTE, pour établir leurs liaisons de communication cellulaire avec l'ensemble des UE qui sont présents dans la cellule qu'elles servent.

Les entités de commande 102 et 110 gèrent et pilotent l'utilisation des ressources radios faites par les équipements radio (les stations de base et les terminaux) de chaque structure mobile, respectivement. En particulier, dans des modes de mise en oeuvre du procédé selon l'invention, ces entités de commande peuvent utiliser toutes les informations obtenues par l'intermédiaire du scanner radio pour piloter l'établissement de liaisons de transport de données de type backhaul entre différentes structures, ainsi que la répartition des ressources radio fréquentielles disponibles pour chaque équipement radio concerné. Ces entités de commande 102 et 110 peuvent être des composantes d'une entité de commande fonctionnellement unique, dont l'implémentation est distribuée dans les structures mobiles 101 et 112, respectivement. Alternativement, l'implémentation de leur fonction peut aussi être distribuée au sein de plusieurs équipements physiques, comme une pluralité de stations de base, et éventuellement des stations de base appartenant à des structures mobiles distinctes.

Dans l'exemple représenté à la figure 1, comme l'illustre de manière symbolique les flèches 113 et 114, les structures mobiles 101 et 112 sont en mouvement, et plus particulièrement en mouvement l'une vers l'autre. La distance séparant les deux structures mobiles se réduit avec le temps, et on considérera le moment où la structure mobile 112 s'apprête à rentrer dans l'environnement immédiat de la structure mobile 101, c'est-à-dire dans la zone de portée radio des équipements radio de ladite structure mobile 101. De manière générale, l'invention s'applique que les structures mobiles soient en mouvement ou non, et qu'elles soient déjà à portée radio l'une de l'autre ou non.

En outre, l'invention vise des situations où les deux structures mobiles 101 et 112 se trouvent ensemble à des distances dépassant la portée radio des stations de base embarquées avec les équipements de réseaux fixes. Elles sont donc susceptibles d'établir entre elles une liaison de transport de données de type backhaul pour créer un réseau backhaul de substitution. Par exemple, il peut s'agir de deux navires se déplaçant en haute mer et qui peuvent mettre en place une liaison de transport de données de type backhaul entre certains de leurs équipements radio respectifs, pour l'échange de données entre eux par radio, sans interconnexion avec un cœur de réseau fixe.

Les deux scanner radio 103 et 111, respectivement embarqués dans les structures mobiles 101 et 112, permettent d'obtenir des informations relatives à l'autre structure mobile. Il s'agit, en particulier, des informations associées à l'utilisation du spectre de fréquence par cette autre structure mobile. Les entités de commande 102 et 110 peuvent ensuite s'appuyer sur ces informations pour décider d'initier ou pas, et pour le cas échéant pour gérer l'établissement d'une liaison de transport de données de type backhaul entre ces structures mobiles.

De plus, comme on le précisera dans la suite, les informations obtenues par l'intermédiaire des scanner radio permettent, de manière plus générale, d'optimiser la gestion de ressources radio fréquentielles pour tous les équipements radio du système situés dans un même environnement (i.e. dans l'environnement immédiat de la structure mobile qui comprend le scanner). Ceci est d'ailleurs vrai, que les équipements radio en question soient concernés ou non par une liaison de transport de données de type backhaul. En outre, les informations obtenues par l'intermédiaire du scanner radio, peuvent aussi être utilisées à d'autres fins que pour les besoins du backhaul, par exemple pour optimiser la répartition de ressources radio fréquentielles entre différents secteurs angulaires associés à une même station de base.

Chaque scanner radio 103 et 111 comprend des moyens de mesure du signal radiofréquence émis dans un spectre de fréquence déterminé. Ce spectre de fréquence est, par exemple, la bande de fréquence normalisée selon le standard LTE qui est utilisée par la station de base de la structure mobile pour établir des liaisons de communication cellulaire avec les terminaux de communication mobiles de sa cellule. La largeur d'une telle bande de fréquence peut varier de 1,4 MHz à 20 MHz dans une plage de fréquences allant de 450 MHz à 3,8 GHz. Cependant, une telle plage de fréquences est donnée à titre d'exemple non limitatif, et pourrait, en fonction du contexte d'utilisation être inférieur à 450 MHz. Alternativement ou complémentairement, le spectre de fréquence peut comprendre des bandes de fréquence supérieures à 3,8 GHz et notamment supérieure à 22 GHz dans le cadre de la mise en œuvre de réseaux 5G. Il peut aussi s'agir du spectre de fréquence spécifiquement associé à un terminal mobile de la structure mobile du scanner radio. En outre, le signal radiofréquence mesuré est un signal radiofréquence émis par au moins une structure mobile tierce qui est située dans l'environnement immédiat de la structure mobile dans laquelle le scanner est embarqué.

Dans l'exemple représenté à la figure 1, les moyens de mesure sont, ou comprennent des moyens d'un dispositif de mesure de signal radiofréquence qui comprend au moins une antenne réceptrice et une unité de traitement. L'antenne permet la réception d'un signal radiofréquence et l'unité de traitement permet de déterminer les propriétés physiques du signal radiofréquence capté par l'antenne. En particulier, l'unité de traitement détermine la puissance de ce signal radiofréquence et les caractéristiques fréquentielles du signal que sont la fréquence centrale et la largeur spectrale de chaque bande de fréquence comprise dans le signal. De manière générale, le dispositif de mesure comprend tout moyen capable de capter un signal radiofréquence émis dans un environnement donné et d'extraire certaines caractéristiques physiques du signal capté. Avantageusement, un tel dispositif de mesure peut mesurer le niveau de puissance, par exemple via un indicateur RSSI, (de l'anglais « Radio Signal Strength Indicator »), la fréquence centrale et la largeur de bande du signal radiofréquence émis dans un spectre de fréquence donné, indépendamment du fait que ce spectre de fréquence soit utilisé ou non par les équipements radio de la structure mobile. Il peut ainsi permettre de repérer des parties d'un spectre de fréquence (i.e. des bandes de fréquences) qui ne sont pas utilisées.

Dans un autre mode de réalisation de l'invention, les moyens de mesure du signal radiofréquence sont, ou comprennent des moyens intégrés à la station de base de la structure mobile. Par exemple, le signal radiofréquence est capté par une antenne émettrice-réceptrice de la station de base et traité par une unité de traitement de cette station de base pour récupérer ses propriétés. Avantageusement, un tel mode de réalisation permet de mesurer tous les signaux radiofréquence spécifiquement émis dans le spectre de fréquence utilisé par la station de base. En outre, dans le cas où la station de base est équipée de plusieurs antennes couvrant plusieurs secteurs angulaires, chaque antenne peut permettre de constituer des moyens de mesure du signal radiofréquence émis dans sa zone de couverture radio.

Enfin dans un autre mode de réalisation de l'invention, les moyens de mesure du signal radiofréquence sont, ou comprennent des moyens d'au moins un terminal de communication mobile de la structure mobile. Par exemple, l'antenne émettrice-réceptrice du terminal détecte un signal radiofréquence émis dans son environnement et une unité de traitement dudit terminal de communication mobile détermine les propriétés de ce signal. Avantageusement, un tel mode de réalisation permet de mesurer tous les signaux radiofréquence émis dans le spectre de fréquence ou dans des bandes de fréquence de ce spectre utilisées par le terminal de communication mobile concerné. En outre, la zone couverte par les moyens de mesure est la zone à portée radio des terminaux de communication mobile et peut donc être assez large. Enfin, plusieurs terminaux de communication mobiles peuvent mesurer en parallèle des signaux radiofréquence dans différentes bandes de fréquence et/ou dans différentes zones géographiques.

Dans tous les modes de réalisation de l'invention, le scanner radio est configuré pour déterminer, sur la base de propriétés physiques du signal radiofréquence mesuré, des informations associées à l'utilisation du spectre de fréquence, pour des transmissions radio, par la structure mobile tierce.

Par exemple, par l'intermédiaire des caractéristiques fréquentielles du signal radiofréquence mesuré, le scanner radio peut déterminer la ou les bandes de fréquence du spectre de fréquence déterminé utilisées par la structure mobile tierce pour ses transmissions radio. Plus concrètement, le scanner radio reconnaît, à partir d'un signal radiofréquence détecté, la (ou les) bande(s) de fréquence qu'utilise la station de base d'une structure mobile tierce située dans son environnement immédiat pour communiquer avec les terminaux mobiles de sa cellule. Avantageusement, l'entité de commande d'une structure mobile peut utiliser ces informations avant d'établir une liaison de transport de données pour attribuer à cette liaison les ressources radio optimales.

Dans un autre exemple, par l'intermédiaire de la puissance du signal radiofréquence mesuré en fonction de la fréquence, le scanner radio peut déterminer si la structure mobile tierce détectée est en train d'entrer ou de sortir de son environnement immédiat. Par exemple, une telle information peut être obtenue en observant l'évolution dans le temps du niveau de bruit du signal fréquence mesuré, ou en le comparant avec une ou plusieurs valeurs seuils considérées associées à la limite de cette zone (i.e. l'environnement immédiat de la structure mobile). Alternativement, la présence d'interférences (i.e. des battements dans le signal radiofréquence mesuré) dans le signal radiofréquence utilisé par la station de base de la structure mobile pour ses communications peut aussi indiquer la présence d'une structure mobile tierce, qui utilise les mêmes ressources radio fréquentielles et se trouve dans l'environnement immédiat de la structure mobile. De telles interférences peuvent notamment être dues à la présence d'une structure tierce « ami », tel que par exemple un véhicule parmi une pluralité de véhicules formant une flotte de véhicules, ou encore une structure mobile tierce « extérieure », tel que par exemple un véhicule tiers, non détecté, ne faisant pas parti d'une flotte de véhicule, et, utilisant les mêmes ressources radio fréquentielles, un tel usage pouvant être destiné à l'émission de signaux de brouillage de communications. Avantageusement, une entité de commande d'une structure mobile peut utiliser ces informations pour commander le changement de la ou des bandes de fréquences utilisées par ses équipements radio pour leurs communication radio et éviter ainsi des interférences avec les communications radio d'une autre structure mobile ou avec une autre structure mobile.

De la même manière, la puissance du signal radiofréquence mesuré peut permettre de déterminer l'éloignement ou le rapprochement de la structure mobile tierce des moyens de mesure du scanner radio. En effet, la puissance du signal capté au niveau d'une antenne réceptrice du scanner radio augmente à mesure que la distance séparant la structure mobile et la structure mobile tierce diminue et inversement elle diminue à mesure que la distance augmente.

Dans un mode de réalisation particulier de l'invention, le scanner radio comprend aussi des moyens de détection et d'identification d'une structure mobile tierce située dans l'environnement immédiat de la structure mobile. Par exemple, le scanner radio peut récupérer, dans les données contenues dans un signal radiofréquence mesuré, un identifiant de type Cell-ID associé à une cellule d'une station de base d'une structure mobile tierce ou un identifiant de type PLMNid associé à un terminal de communication mobile d'une structure mobile tierce. En outre, tous type de données, comprise dans le signal radiofréquence mesuré, et permettant une identification peut être utilisé. Par exemple, une adresse MAC ou un block d'information système SIB. Ce type de données d'identification sont en soi connues d'équipements radio tels que ceux d'une structure mobile et peuvent donc être récupérées facilement au sein d'un signal mesuré. Avantageusement, une telle identification permet de déterminer si une liaison de transport de données de type backhaul peut être établie ou non avec une structure mobile détectée, au regard de considérations de sécurité. Typiquement, il est ainsi possible de savoir si une structure mobile tierce est une structure mobile amie, ennemie ou neutre ou même si cette structure mobile fait déjà partie d'un réseau formé avec, ou mémorisé dans une mémoire de la structure mobile.

Enfin, dans un mode de réalisation particulier de l'invention, le scanner radio peut aussi reconnaître, sur la base des propriétés du signal radiofréquence, des caractéristiques dites technologiques de la transmission radio réalisé par la structure mobile tierce. Par exemple, le scanner radio peut reconnaître le format de modulation utilisé pour la transmission radio détectée (par exemple le format OFDMA ou le format SC-FDMA...), l'interface radio utilisée pour cette transmission (par exemple l'interface LTE-Uu ou l'interface LTE-Un) ou encore le protocole ou la norme utilisés pour cette transmission radio (par exemple 3G, 2G ou wifi). En outre, avantageusement, une telle reconnaissance permet aussi d'identifier une transmission radio effectuée par l'intermédiaire d'un équipement utilisateur dédié et ne s'appuyant sur aucun format ou protocole connu.

Comme cela a été mentionné, selon l'invention les moyens de mesure du scanner radio embarqué sont configurés pour mesurer le signal radiofréquence sur des ressources radios non utilisées par les liaisons de communication cellulaire avec les terminaux de communication mobiles et l'entité de commande peut gérer l'allocation des ressources radio dans le spectre sur la base des informations obtenues grâce au scanner. Ainsi, cela permet de réduire les interférences par exemple lors de la mesure des transmissions radio émises par la structure tierce ou bien pour les communications en général à l'approche de la structure tierce.

Considérant le standard LTE, il regroupe un bloc de données à transmettre en 12 bandes de 15 kHz (selon la technique de modulation OFDM). Un bloc élémentaire en LTE utilise donc un spectre de 12x15 kHz = 180 kHz. On appelle « Bloc Ressource » ou RB, les 12 bandes de 15 kHz transportant le bloc de données. Ensuite, on notera qu'une trame LTE dure 10 ms. Elle est découpée en 10 sous-trames d'une durée de 1 ms chacune. Chaque sous-trame est divisée en deux slots de 0,5ms. Un slot dure donc 0,5 ms, durée pendant laquelle 7 symboles sont transmis par bande OFDM. Or, dans la mesure où il y a 12 bandes OFDM, cela fait que 84 symboles (7 symboles fois 12 bandes sont transmis en 0,5 ms. En outre, 1 symbole peut transmette de 1 bit à 6 bits, selon la modulation choisie (de la modulation QPSK à la modulation 128 QAM). Enfin, le standard LTE permet d'exploiter des largeurs de bande de 1,4 MHz, 3 MHz, 5 MHz, 10 MHz, 15 MHz et 20 MHz. Une Ressource Bloc (RB) correspondant à une bande de 180 kHz, il s'ensuit que si la communication utilise :
- une bande de 1,4 MHz, alors 6 RB peuvent être exploitées ;
- une bande de 3 MHz, alors 15 RB peuvent être exploitées ;
- une bande de 5 MHz, alors 25 RB peuvent être exploitées ;
- une bande de 10 MHz, alors 50 RB peuvent être exploitées ;
- une bande de 15 MHz, alors 75 RB peuvent être exploitées ; ou,
- une bande de 20 MHz, alors 100 RB peuvent être exploitées

Ainsi, si la station de base dispose d'une bande de fréquence de 15 MHz de large, alors elle possède 75 RB, et elle peut donc transmettre jusqu'à 75x84 symboles de 6 bits en 0,5 ms. Autrement dit, 37800 bits sont transmis en 0,5 ms, c'est-à-dire que le débit binaire est égal à 75,6 Mbits/s. Si la station de base dispose d'une bande de fréquence de 10 MHz de large, elle possède 50 RB, et peut donc transmettre 50x84 symboles de 6 bits en 0,5 ms. Autrement dit, 25200 bits sont transmis en 0,5 ms, soit un débit binaire égal à 50,4 Mbits/s. Et ainsi de suite pour les autres largeurs de spectre des bandes de fréquence normalisées selon le standard LTE (à savoir 5 MHz, 3 MHz et 1,4 MHz).

Dans des modes selon l'invention, les moyens de mesure du scanner radio embarqué sont configurés pour mesurer le signal radiofréquence sur des Ressource Bloc non utilisées par les liaisons de communication cellulaire avec les terminaux de communication mobiles.

De même, l'entité de commande peut gérer l'allocation des ressources radio dans le spectre sur la base des informations obtenues grâce au scanner et autoriser les liaisons de communication cellulaire avec les terminaux de communication mobiles seulement sur des Ressource Bloc non utilisées par la structure tierce et/ou le scanner radio embarqué.

En référence à la **figure 2** nous allons maintenant décrire un mode de mise en œuvre du procédé selon l'invention. Le procédé peut être exécuté de manière continue et ainsi permettre, à chaque itération des étapes qui vont être décrites, d'obtenir de nouvelles informations associées à l'utilisation du spectre de fréquence par une structure mobile tierce, par l'intermédiaire du scanner radio embarqué. Le procédé est exécuté dans une structure mobile qui embarque un scanner radio conforme à celle qui a été décrite en référence à la figure 1.

Dans un premier mode de mise en œuvre du procédé, l'étape 201 consiste à mesurer un signal radiofréquence émis dans le spectre de fréquence utilisé pour les communications radio des équipements radio de la structure mobile. Ce signal radiofréquence ayant été émis par au moins une structure mobile tierce qui est située dans l'environnement immédiat de la structure mobile.

L'étape 202 consiste ensuite à déterminer, sur la base de propriétés physiques du signal radiofréquence mesuré, les informations associées à l'utilisation du spectre de fréquence déterminé, pour des transmissions radio, par la structure mobile tierce. Pour rappel, le spectre de fréquence déterminé peut être le spectre de fréquence utilisé par la station de base de la structure mobile pour ces communications cellulaires, le spectre de fréquence utilisé par un terminal mobile de cette structure mobile ou un spectre de fréquence utilisable par (et réservé à) une ou plusieurs structure(s) mobile pour toutes ses (leurs) transmissions radio.

Le mode de mise en œuvre du procédé décrit plus haut s'applique en particulier à l'utilisation d'un scanner radio dont les moyens de mesure du signal radiofréquence sont ceux d'un dispositif dédié de mesure du signal radiofréquence. Toutefois, comme il a été déjà été discuté dans ce qui précède en référence à la figure 1, dans certains cas, les moyens de mesure du signal radiofréquence sont ceux d'un équipement radio de la structure mobile qui embarque le scanner radio. Dans ces cas, il peut être nécessaire, pour pouvoir utiliser les moyens de mesure du signal radiofréquence de manière efficiente, d'interrompre toutes les communications radio en cours pour les équipements radio de ladite structure mobile. En effet, ces communications radio sont susceptibles de perturber la mesure et de conduire à déterminer de fausses informations sur la base de cette mesure. En particulier lorsque les moyens de mesure du signal radiofréquence utilisés sont intégrés soit à une station de base soit à un ou plusieurs terminaux de communications mobiles. Dans cette configuration, les transmissions radio d'une station de base ou de terminaux de communications mobiles doivent être arrêtées avant chaque opération de scan radio. Le procédé étant réalisé de manière itérative, chacun de ces équipement radio peut alors être utilisé alternativement pour sa fonction de transmission radio ou pour sa fonction de scanner radio.

Ainsi, dans un autre mode de mise en œuvre (non-représenté), le procédé comprend une première étape au cours de laquelle le ou les équipements radio qui intègrent les moyens de mesure du signal radiofréquence interrompent leurs communications radio en cours avant la réalisation des étapes de mesure du signal radiofréquence et de détermination des informations associées. Avantageusement, l'exécution du procédé ne perturbe pas de communications radio établies.

Finalement, dans un autre mode de mise en œuvre du procédé selon l'invention, toutes les informations qui sont obtenues par l'intermédiaire du scanner radio sont transmises, au fur et à mesure, à une entité de commande de la structure mobile qui gère et organise l'utilisation des ressources radio faite par tous les équipements radio situés dans l'environnement immédiat de la structure mobile. En particulier, l'utilisation des ressources radio est réalisée spécifiquement dans un mode local pour les terminaux de communication de la structure mobiles. De façon préférée, les informations de plusieurs scanners radio embarqués, qui sont chacun associé à une cellule de l'eNodeB local peuvent être agrégées localement de façon à obtenir une vue locale cohérente sur 360° des informations associées à l'utilisation du spectre de fréquence déterminé par des structures tierces.

Ensuite, l'entité de commande peut coordonner l'établissement d'une liaison de données entre les stations de base impliquées (i.e. structure mobile et structure(s) tierce(s)).

De façon générale, l'entité de commande 102 de la structure mobile 101 peut aussi être configurée pour mettre en œuvre une étape d'identification des ressources radio utilisées par la structure tierce 112 et pour réinitialiser les liaisons de communication cellulaire avec les terminaux de communication mobiles 106a,106b de façon à ne pas utiliser les ressources radio utilisées par la structure tierce.

Ensuite, l'entité de commande peut être configurée pour identifier des ressources radio, telles qu'un spectre de fréquence d'une largeur déterminée n'étant pas utilisé par la structure tierce.

Ainsi, l'entité de commande 102 peut être configurée pour mettre en œuvre une étape de réinitialisation des liaisons de communication cellulaire avec les terminaux de communication mobiles de façon à utiliser au moins une partie des ressources radio libres. De préférence, il n'y a utilisation que des ressources radio libres.

Alternativement, l'entité de commande 102 de la structure mobile, est configurée pour identifier les ressources radio utilisées par la structure tierce, identifier le réseau utilisé par la structure tierce (e.g. PLMNid - Public Land Mobile Network identifier en terminologie anglosaxonne) et pour configurer les terminaux de communication mobiles de façon à stopper toute émission d'un signal radiofréquence.

En outre, l'entité de commande 102 de la structure mobile mettre en œuvre une étape d'attribution d'une partie des ressources radio libres à l'établissement d'une liaison de transport de données de type backhaul reliant la structure mobile à la structure tierce. Dans ce cas, les ressources radio libres utilisées pour l'établissement d'une liaison de transport de données de type backhaul sont avantageusement différentes des ressources radio libres utilisées pour les liaisons de communication cellulaire avec les terminaux de communication mobiles.

En outre, l'entité de commande 102 de la structure mobile peut être configurée pour mettre en œuvre une étape d'identification de la structure tierce. Cette étape d'identification de la structure tierce peut notamment comporter d'identification du réseau utilisé par la structure tierce (e.g. identification du PLMNid - Public Land Mobile Network identifier en terminologie anglosaxonne). De façon avantageuse, l'entité de commande 102 de la structure mobile peut être configuré pour mettre en œuvre une comparaison du PLMNid de la structure tierce à une base de données prédéterminées de PLMNid. Dans ce contexte, l'étape d'attribution d'une partie des ressources radio libres à l'établissement d'une liaison de transport de données de type backhaul reliant la structure mobile à la structure tierce et plus largement peut être conditionnée à des autorisations prédéterminées associées aux PLMNid contenus dans la base de données mentionnée ci-dessus.

Dans des modes de mises en œuvre, la réinitialisation des liaisons de communication cellulaire antérieurement établies dans une bande de fréquence utilisée à l'origine, dans une nouvelle bande de fréquence utilisant exclusivement des ressources radio libres peut consister à exécuter les étapes de : - blocage, par la station de base, d'un canal d'accès aléatoire de type PRACH (de l'anglais « *Physical Random Access Channel* »), afin d'empêcher provisoirement la réception de requêtes en allocation de ressources radio en provenance des terminaux de communication mobiles ayant une liaison de communication cellulaire avec ladite station de base ; - détachement des terminaux de communication mobiles ayant une liaison de communication cellulaire avec la station de base, de la bande de fréquence utilisée par ladite station de base pour ses liaisons de communication cellulaire ; - reconfiguration des ressources radio disponibles par la station de base dans la nouvelle bande de fréquence ; et, - déblocage du canal PRACH par la station de base, ce qui permet le ré-attachement naturel des terminaux de communication mobiles qui demandent et obtiennent l'établissement d'une nouvelle une liaison de communication cellulaire avec la station de base, dans la bande de fréquence nouvellement allouée à ladite station de base.

Concernant le blocage d'un canal d'accès aléatoire de type PRACH, celui-ci peut être exécuté de plusieurs façons. Le blocage peut par exemple comporter un arrêt de gestion des RACH en local sur la station de base. Cela conduirait à un rejet temporaire de toute demande.

De façon préférée, il peut comporter le blocage de l'accès à la cellule signalée sur les informations système de la cellule, le temps d'effectuer la reconfiguration. Cette procédure peut être appelée « Barring Cell » en terminologie anglo-saxonne. Ainsi, aucun terminal ne peut alors tenter de joindre le PRACH. L'utilisation dans ce contexte particulier d'une telle procédure peut permettre de limiter la surcharge du système inutilement et augmente l'autonomie des terminaux.

En outre, avantageusement, dans le cadre d'un blocage de l'accès à la cellule, le procédé peut comporter une prise en compte des classes de terminaux. Les classes de terminaux se réfèrent en particulier aux AC (« Access class » en terminologie anglosaxonne) configurés dans la SIM de chaque terminal. Dans ce contexte, le procédé peut comporter, lors de l'étape de déblocage du canal PRACH, le déblocage que d'une partie des classes de terminaux de façon à faire par exemple un déblocage graduel et ainsi éviter de congestionner le système.

L'entité de commande 102 de la structure mobile 101 peut être en particulier configurée pour mettre en œuvre une étape de d'identification des ressources radio utilisées par la structure tierce 112 et pour configurer un terminal de communication de façon à ce qu'il émette un signal radiofréquence utilisant les ressources radio utilisées par la structure tierce 112. De façon avantageuse, ce signal radiofréquence est d'une intensité supérieure aux signaux radiofréquence utilisés pour les liaisons de communication cellulaire avec les terminaux de communication mobiles. Par exemple, ce signal radiofréquence peut être supérieur d'un facteur 2, 4, 8 ou 10.

En outre, comme il a été dit plus haut, une telle entité de commande peut être distribuée entre plusieurs structures mobiles et de ce fait, superviser la répartition des ressources radio fréquentielles pour toutes ces structures mobiles. Ainsi, de manière avantageuse, grâce à l'utilisation du scanner radio, l'utilisation des ressources radio, et plus particulièrement du spectre de fréquence, faite par chaque équipement radio peut être optimisée. Chaque équipement radio, qu'il participe à une liaison de communication cellulaire au sein d'une cellule ou qu'il participe à une liaison de transport de données de type backhaul entre deux structures peut bénéficier du maximum de ressources radio possible sans risquer d'entraîner des interférences.

## Revendications

1. Structure mobile (101) d'un système de radiocommunications, ladite structure mobile (101) comprenant :
- au moins une station de base (104) qui est adaptée pour établir des liaisons de communication cellulaire avec des terminaux de communication mobiles (106a, 106b) via une interface radio (LTE-Uu) déterminée, dans un spectre de fréquence déterminé ; et
- un scanner radio embarqué (103) ayant des moyens de mesure d'un signal radiofréquence émis dans le spectre de fréquence déterminé, par au moins une structure tierce (112) située dans l'environnement immédiat (105) de ladite structure mobile (101) ;
**caractérisé en ce que** ledit scanner est configuré pour déterminer, sur la base de propriétés physiques du signal radiofréquence mesuré, des informations associées à l'utilisation du spectre de fréquence déterminé pour des transmissions radio émises par ladite structure tierce (112), lesdites informations servant à une décision d'initier ou pas, et le cas échéant gérer, l'établissement d'une liaison de transport de données de type backhaul entre la structure mobile (101) et la structure tierce (112),
le scanner radio embarqué étant configuré pour transmettre à une entité de commande (102) de la structure mobile (101), les informations associées à l'utilisation du spectre de fréquence déterminé, pour des transmissions radio, émises par la structure tierce (112),
l'entité de commande (102) de la structure mobile (101) étant configurée pour identifier, à partir desdites informations, des ressources radio libres, telles qu'un nouveau spectre de fréquence d'une largeur inférieure au spectre de fréquence déterminé, non utilisées par la structure tierce (112),
l'entité de commande (102) de la structure mobile (101) étant, en outre, configurée pour attribuer une partie des ressources radio libres à l'établissement de la liaison de transport de données de type backhaul reliant la structure mobile (101) à la structure tierce (112).

2. Structure mobile (101) selon la revendication 1, **caractérisée en ce que** les informations associées à l'utilisation du spectre de fréquence par la structure tierce (112) comprennent :
- l'entrée ou la sortie de la structure tierce (112) dans l'environnement immédiat (105) de la structure mobile (101) ;
- l'éloignement ou le rapprochement de la structure tierce (112) de la structure mobile (101) ; et
- la ou les bandes de fréquence du spectre de fréquence qui sont utilisées par la structure tierce (112).

3. Structure mobile (101) selon l'une quelconque des revendications précédentes, **caractérisée en ce que** les informations associées à l'utilisation du spectre de fréquence déterminé sont déterminées pour des transmissions radio émises par une station de base de la structure tierce.

4. Structure mobile (101) selon l'une quelconque des revendications précédentes, **caractérisée en ce que** les moyens de mesure du scanner radio embarqué sont configurés pour mesurer le signal radiofréquence émis par un relais radio émettant majoritairement sur le spectre DL, pour « Down-link » en terminologie anglo-saxonne.

5. Structure mobile (101) selon l'une quelconque des revendications précédentes, **caractérisée en ce que** les moyens de mesure du scanner radio embarqué sont configurés pour mesurer le signal radiofréquence sur des ressources radios non utilisées par les liaisons de communication cellulaire avec les terminaux de communication mobiles.

6. Structure mobile (101) selon l'une quelconque des revendications précédentes, **caractérisée en ce qu'**elle comprend en outre des moyens d'identification d'une structure tierce (112) située dans l'environnement immédiat (105) de la structure mobile (101), lesdits moyens d'identification étant configurés pour identifier, sur la base d'informations contenues dans le signal radiofréquence mesuré, la structure tierce émettrice d'un signal radiofréquence mesuré par lesdits moyens de mesure du scanner radio.

7. Structure mobile (101) selon la revendication 6, **caractérisée en ce que** les informations contenues dans le signal radiofréquence mesuré par les moyens de mesure du scanner radio et utilisées par les moyens d'identification comprennent un identifiant de type Cell-ID associé à une station de base d'une autre structure mobile, et/ou un identifiant de type PLMNid, pour Public Land Mobile Network id, associé à un terminal de communication mobile d'une autre structure mobile.

8. Structure mobile (101) selon l'une quelconque des revendications précédentes, **caractérisée en ce qu'**elle comprend en outre des moyens de reconnaissance configurés pour reconnaître, sur la base des informations contenues dans le signal radiofréquence mesuré par les moyens de mesure du scanner radio embarqué (103), des caractéristiques technologiques de la transmission radio réalisées par la structure tierce (112) telles que le format de modulation utilisé, l'interface radio utilisée, et/ou le protocole utilisé pour ladite transmission radio.

9. Structure mobile (101) selon la revendication 1, **caractérisée en ce que** l'entité de commande (102) de la structure mobile (101), est configurée pour identifier des ressources radio utilisées par la structure tierce (112) et pour réinitialiser les liaisons de communication cellulaire avec les terminaux de communication mobiles (106a,106b) de façon à ne pas utiliser les ressources radio utilisées par la structure tierce (112).

10. Structure mobile (101) selon la revendication 1, **caractérisée en ce que** l'entité de commande (102) de la structure mobile (101), est configurée pour identifier des ressources radio utilisées par la structure tierce, identifier le réseau utilisé par la structure tierce et pour configurer les terminaux de communication mobiles de façon à stopper toute émission d'un signal radiofréquence.

11. Procédé d'utilisation d'un scanner radio embarqué (103) dans une structure mobile (101) d'un système de radiocommunications, ladite structure mobile (101) ayant au moins une station de base (104) qui est adaptée pour établir des liaisons de communication cellulaire avec des terminaux de communication mobiles (106a, 106b) via une interface radio (LTE-Uu) déterminée, dans un spectre de fréquence déterminé, ledit procédé comprenant :
- une étape de mesure (201), par ledit scanner radio embarqué, d'un signal radiofréquence émis dans ledit spectre de fréquence déterminé, par au moins une structure tierce (112) située dans l'environnement immédiat (105) de ladite structure mobile (101) ;
**caractérisé en ce qu'**il comprend en outre une étape de détermination (202), par ledit scanner radio embarqué, sur la base de propriétés physiques du signal radiofréquence mesuré, d'informations associées à l'utilisation dudit spectre de fréquence déterminé, pour des transmissions radio émises par ladite structure tierce (112) ,lesdites informations servant à une décision d'initier ou pas, et pour, le cas échéant gérer, l'établissement d'une liaison de transport de données de type backhaul entre la structure mobile (101) et la structure tierce (112),
le scanner radio embarqué étant configuré pour transmettre à une entité de commande (102) de la structure mobile (101), des informations associées à l'utilisation du spectre de fréquence déterminé, pour des transmissions radio, émises par la structure tierce (112),
l'entité de commande (102) de la structure mobile (101) étant configurée pour identifier des ressources radio libres, telles qu'un nouveau spectre de fréquence d'une largeur inférieure au spectre de fréquence déterminé, non utilisées par la structure tierce (112),
l'entité de commande (102) de la structure mobile (101) étant, en outre, configurée pour attribuer une partie des ressources radio libres à l'établissement de la liaison de transport de données de type backhaul reliant la structure mobile (101) à la structure tierce (112).

12. Procédé d'utilisation d'un scanner radio (103) selon la revendication 11, **caractérisé en ce qu'**il comprend en outre l'étape préalable suivante, exécutée par une entité de commande de la structure mobile (101) :
- allocation de ressources radio dédiées au scanner radio embarqué (103), lesdites ressources radio dédiées au scanner radio embarqué n'étant pas utilisées pour établir des communications radio entre la station de base de la structure mobile (101) et les terminaux de communication mobiles de la structure mobile (101).

## Patentansprüche

1. Mobile Struktur (101) eines Funkkommunikationssystems, wobei die mobile Struktur (101) Folgendes umfasst:
- mindestens eine Basisstation (104), die dazu ausgelegt ist, Mobilfunkkommunikationsverbindungen mit mobilen Kommunikationsendgeräten (106a, 106b) über eine bestimmte Funkschnittstelle (LTE-Uu) in einem bestimmten Frequenzspektrum aufzubauen; und
- einen eingebauten Funkscanner (103) mit Mitteln zum Messen eines Hochfrequenzsignals, das in dem bestimmten Frequenzspektrum von mindestens einer Drittstruktur (112) gesendet wird, die sich in der unmittelbaren Umgebung (105) der mobilen Struktur (101) befindet;
**dadurch gekennzeichnet, dass** der Scanner dazu eingerichtet ist, auf Basis physikalischer Eigenschaften des gemessenen Hochfrequenzsignals Informationen zu ermitteln, die mit der Verwendung des ermittelten Frequenzspektrums für Funkübertragungen, die von der Drittstruktur (112) ausgesendet werden, in Zusammenhang stehen, wobei die Informationen für eine Entscheidung darüber verwendet werden, den Aufbau einer Backhaul-Datentransportverbindung zwischen der mobilen Struktur (101) und der Drittstruktur (112) zu initiieren oder nicht und erforderlichenfalls zu verwalten,
wobei der eingebaute Funkscanner dazu eingerichtet ist, die mit der Verwendung des bestimmten Frequenzspektrums in ZUsammenhang stehenden Informationen für Funkübertragungen, die von der Drittstruktur (112) gesendet werden, an eine Steuereinheit (102) der mobilen Struktur (101) zu übertragen,
wobei die Steuereinheit (102) der mobilen Struktur (101) dazu eingerichtet ist, anhand der Informationen freie Funkressourcen, wie ein neues Frequenzspektrum mit einer Breite, die kleiner als das bestimmte Frequenzspektrum ist und nicht von der Drittstruktur verwendet wird (112), zu identifizieren,
wobei die Steuereinheit (102) der mobilen Struktur (101) ferner dazu eingerichtet ist, einen Teil der freien Funkressourcen dem Aufbau der die mobile Struktur (101) mit der Drittstruktur (112) verbindenden Backhaul-Datentransportverbindung zuzuweisen.

2. Mobile Struktur (101) nach Anspruch 1, **dadurch gekennzeichnet, dass** die mit der Verwendung des Frequenzspektrums durch die Drittstruktur (112) in Zusammenhang stehenden Informationen Folgendes umfassen:
- den Ein- oder Austritt der Drittstruktur (112) in die unmittelbare Umgebung (105) der mobilen Struktur (101);
- das Bewegen der Drittstruktur (112) von der mobilen Struktur (101) weg oder zu dieser hin; und
- das oder die von der Drittstruktur (112) verwendeten Frequenzbänder des Frequenzspektrums.

3. Mobile Struktur (101) nach einem der vorhergehenden Ansprüche,
**dadurch gekennzeichnet, dass** für von einer Basisstation der Drittstruktur gesendete Funkübertragungen die mit der Verwendung des bestimmten Frequenzspektrums in Zusammenhang stehenden Informationen ermittelt werden.

4. Mobile Struktur (101) nach einem der vorhergehenden Ansprüche,
**dadurch gekennzeichnet, dass** die Messmittel des eingebauten Funkscanners dazu eingerichtet sind, das Hochfrequenzsignal zu messen, das von einem Funkrelais gesendet wird, das hauptsächlich im DL-Spektrum sendet, wobei in der englischen Terminologie DL für "Down-Link" steht.

5. Mobile Struktur (101) nach einem der vorhergehenden Ansprüche,
**dadurch gekennzeichnet, dass** die Messmittel des eingebauten Funkscanners dazu eingerichtet sind, das Hochfrequenzsignal auf nicht von den Mobilfunkkommunikationsverbindungen mit den mobilen Kommunikationsendgeräten verwendeten Funkressourcen zu messen.

6. Mobile Struktur (101) nach einem der vorhergehenden Ansprüche,
**dadurch gekennzeichnet, dass** sie ferner Mittel zum Identifizieren einer sich in der unmittelbaren Umgebung (105) der mobilen Struktur (101) befindenden Drittstruktur (112) umfasst, wobei die Identifizierungsmittel dazu eingerichtet sind, basierend auf Informationen, die in dem gemessenen Hochfrequenzsignal enthalten sind, die Drittstruktur zu identifizieren, die ein Hochfrequenzsignal sendet, das von den Messmitteln des Funkscanners gemessen wurde.

7. Mobile Struktur (101) nach Anspruch 6, **dadurch gekennzeichnet, dass** die Informationen, die in dem von den Messmitteln des Funkscanners gemessenen Hochfrequenzsignal enthalten sind und von den Identifikationsmitteln verwendet werden, eine Kennung vom Typ Cell-ID, die mit einer Basisstation einer anderen mobilen Struktur zugeordnet ist, und/oder eine Kennung vom Typ PLMNid (Public Land Mobile Network id), die mit einem mobilen Kommunikationsendgerät einer anderen mobilen Struktur zugeordnet ist, umfassen.

8. Mobile Struktur (101) nach einem der vorhergehenden Ansprüche,
**dadurch gekennzeichnet, dass** sie außerdem Erkennungsmittel umfasst, die dazu eingerichtet sind, basierend auf den Informationen, die in dem von den Messmitteln des Bordfunkscanners (103) gemessenen Hochfrequenzsignal enthalten sind, technologische Merkmale der von der Drittstruktur (112) durchgeführten Funkübertragung, wie das verwendete Modulationsformat, die verwendete Funkschnittstelle und/oder das für die Funkübertragung verwendete Protokoll, zu erkennen.

9. Mobile Struktur (101) nach Anspruch 1, **dadurch gekennzeichnet, dass** die Steuereinheit (102) der mobilen Struktur (101) dazu eingerichtet ist, von der Drittstruktur (112) verwendete Funkressourcen zu identifizieren und die Mobilfunkkommunikationsverbindungen mit den mobilen Kommunikationsendgeräten (106a, 106b) derart zurückzusetzen, dass die von der Drittstruktur (112) verwendeten Funkressourcen nicht verwendet werden.

10. Mobile Struktur (101) nach Anspruch 1, **dadurch gekennzeichnet, dass** die Steuereinheit (102) der mobilen Struktur (101) dazu eingerichtet ist, von der Drittstruktur verwendete Funkressourcen zu identifizieren, das von der Drittstruktur verwendete Netzwerk zu identifizieren und die mobilen Kommunikationsendgeräte derart zu konfigurieren, dass alle Sendungen eines Hochfrequenzsignals gestoppt werden.

11. Verfahren zur Verwendung eines eingebauten Funkscanners (103) in einer mobilen Struktur (101) eines Funkkommunikationssystems, wobei die mobile Struktur (101) mindestens eine Basisstation (104) aufweist, die dazu ausgelegt ist, Mobilfunkkommunikationsverbindungen mit mobilen Kommunikationsendgeräten (106a, 106b) über eine bestimmte Funkschnittstelle (LTE-Uu) in einem bestimmten Frequenzspektrum aufzubauen, wobei das Verfahren Folgendes umfasst:
- einen Schritt des Messens (201), durch den eingebauten Funkscanner, eines Hochfrequenzsignals, das in dem bestimmten Frequenzspektrum von mindestens einer Drittstruktur (112), die sich in der unmittelbaren Umgebung (105) der mobilen Struktur (101) befindet, ausgesendet wird,
**dadurch gekennzeichnet, dass** es ferner einen Schritt umfasst, bei dem der eingebaute Funkscanner auf Basis physikalischer Eigenschaften des gemessenen Hochfrequenzsignals Informationen bestimmt (202), die mit der Verwendung des bestimmten Frequenzspektrums für von der Drittstruktur (112) gesendete Funkübertragungen in Zusammenhang stehen, wobei die Informationen für eine Entscheidung darüber dienen, ob ein Datenaustausch gestartet werden soll oder nicht, und um, gegebenenfalls die Einrichtung einer Datentransportverbindung vom Backhaul-Typ zwischen der mobilen Struktur (101) und der Drittstruktur (112) zu verwalten, wobei der eingebaute Funkscanner dazu eingerichtet ist, an eine Steuereinheit (102) der mobilen Struktur (101) Informationen zu übertragen, die mit der Verwendung des bestimmten Frequenzspektrums für von der Drittstruktur (112) gesendete Funkübertragungen in Zusammenhang stehen,
wobei die Steuereinheit (102) der mobilen Struktur (101) dazu eingerichtet ist, freie Funkressourcen, wie ein neues Frequenzspektrum mit einer Breite, die kleiner als das bestimmte Frequenzspektrum ist und nicht von der Drittstruktur verwendet wird (112), zu identifizieren,
wobei die Steuereinheit (102) der mobilen Struktur (101) ferner dazu eingerichtet ist, einen Teil der freien Funkressourcen dem Aufbau der die mobile Struktur (101) mit der Drittstruktur (112) verbindenden Backhaul-Datentransportverbindung zuzuweisen.

12. Verfahren zur Verwendung eines Funkscanners (103) nach Anspruch 11,
**dadurch gekennzeichnet, dass** es ferner den folgenden vorhergehenden Schritt umfasst, der von einer Steuereinheit der mobilen Struktur (101) ausgeführt wird:
- Zuweisen von ausschließlich durch den eingebauten Funkscanner (103) verwendeten Funkressourcen, wobei die ausschließlich durch den eingebauten Funkscanner (103) verwendeten Funkressourcen nicht zum Aufbauen von Funkkommunikationen zwischen der Basisstation der mobilen Struktur (101) und den mobilen Kommunikationsendgeräten der mobilen Struktur (101) verwendet werden.

## Claims

1. A mobile structure (101) of a radio-communication system, said mobile structure (10) comprising:
- a base station (104) which is adapted to establish cellular communication links with the mobile communication terminals (106a, 106b) through a specific radio interface (LTE-Uu), in a specific frequency spectrum;
- a mounted radio scanner (103) having means for measuring a radiofrequency signal transmitted in the specific frequency spectrum, by at least one third-party structure (112) located in the immediate environment (105) of said mobile structure (101),
**characterized in that** said scanner is configured to determine, based on physical properties of the measured radiofrequency signal, information associated with the use of the specific frequency spectrum for radio transmissions transmitted by said third-party structure (112) and that can be used to decide whether or not to initiate and, if necessary, to manage the establishment of a backhaul data transport link between the mobile structure (101) and the third-party structure (112),
the mounted radio scanner being configured to transmit to a control entity (102) of the mobile structure (101), information associated with the use of the determined frequency spectrum, for radio transmissions, transmitted by the third-party structure (112),
the control entity (102) of the mobile structure (101) being configured to identify free radio resources, such as a new frequency spectrum with a width smaller than the specific frequency spectrum, which are not used by the third-party structure (112),
the control entity (102) of the mobile structure (101) being further configured to allocate a portion of the free radio resources to the establishment of a backhaul data transport link connecting the mobile structure (101) to the third-party structure (112).

2. The mobile structure (101) according to claim 1, **characterized in that** the information associated with the use of the frequency spectrum by the third-party structure (112) comprises:
- the third-party structure (112) entering or exiting into or out of the immediate environment (105) of the mobile structure (101);
- moving the third-party structure (112) away from or towards the mobile structure (101); and,
- the frequency band(s) of the frequency spectrum which are used by the third-party structure (112).

3. The mobile structure (101) according to any of the preceding claims, **characterized in that** the information associated with the use of the specific frequency spectrum is specific for radio transmissions transmitted by a base station of the third-party structure.

4. The mobile structure (101) according to any of the preceding claims, **characterized in that** the mounted radio scanner measurement means are configured to measure the radiofrequency signal transmitted by a radio relay transmitting predominantly on the downlink spectrum.

5. The mobile structure (101) according to any one of the preceding claims, **characterized in that** the mounted radio scanner measurement means are configured to measure the radiofrequency signal on radio resources not used by cellular communication links with mobile communication terminals.

6. The mobile structure (101) according to any one of the preceding claims, **characterized in that** it further comprises means for identifying a third-party structure (112) located in the immediate environment (105) of the mobile structure (101), said identification means being configured to identify, based on information contained in the measured radiofrequency signal, the third-party structure transmitting a radiofrequency signal measured by said radio scanner measuring means.

7. The mobile structure (101) according to claim 6, **characterized in that** the information contained in the radiofrequency signal measured by the radio scanner measurement means and used by the identification means comprises a Cell-ID identifier associated with a base station of another mobile structure, and/or a Public Land Mobile id identifier associated with a mobile communication terminal of another mobile structure.

8. The mobile structure (101) according to any of the preceding claims, **characterized in that** it further comprises recognition means configured to recognize, based on the information contained in the radiofrequency signal measured by the mounted radio scanner measurement means (103), technological characteristics of the radio transmission sent by the third-party structure (112) such as the modulation format used, the radio interface used, and/or the protocol used for said radio transmission.

9. The mobile structure (101) according to claim 1, **characterized in that** the control entity (102) of the mobile structure (101), is configured to identify the radio resources used by the third-party structure (112) and to reset the cellular communication links with the mobile communication terminals (106a, 106b) so as not to use the radio resources used by the third-party structure (112).

10. The mobile structure (101) according to claim 1, **characterized in that** the control entity (102) of the mobile structure (101) is configured to identify the radio resources used by the third-party structure, to identify the network used by the third-party structure and to conFigure the mobile communication terminals so as to stop any transmission of a radiofrequency signal.

11. A method for using a mounted radio scanner (103) in a mobile structure (101) of a radio-communication system, said mobile structure (101) having at least one base station (104) which is adapted to establish cellular communication links with mobile communication terminals (106a, 106b) through a specific radio interface (LTE-Uu), in a specific frequency spectrum, said method comprising:
- a step for measuring (201), by said mounted radio scanner, a radiofrequency signal emitted in the specific frequency spectrum, by at least one third-party structure (112), located in the immediate environment (105) of the mobile structure (101),
**characterized in that** it further comprises a step for determining (202), by said mounted radio scanner, based on physical properties of the measured radiofrequency signal, information associated with the use of the specific frequency spectrum for radio transmissions transmitted by said third-party structure (112), said information being used to decide whether or not to initiate and, if necessary, to manage the establishment of a backhaul data transport link between the mobile structure (101) and the third-party structure (112),
the mounted radio scanner being configured to transmit to a control entity (102) of the mobile structure (101), information associated with the use of the determined frequency spectrum, for radio transmissions, transmitted by the third-party structure (112),
the control entity (102) of the mobile structure (101) being configured to identify free radio resources, such as a new frequency spectrum with a width smaller than the specific frequency spectrum, which are not used by the third-party structure (112),
the control entity (102) of the mobile structure (101) being further configured to allocate a portion of the free radio resources to the establishment of a backhaul data transport link connecting the mobile structure (101) to the third-party structure (112).

12. The method for using a radio scanner (103) according to claim 11, **characterized in that** further comprises the following prior step, implemented by a mobile structure control entity (101):
- allocating radio resources dedicated to the mounted radio scanner (103), said radio resources dedicated to the mounted radio scanner not being used to establish radio-communications between the base station of the mobile structure (101) and the mobile communication terminals of the mobile structure (101).
